# EUROPÄISCHE PATENTANMELDUNG

(11) **EP 0 959 291 A2**
(43) Veröffentlichungstag der Anmeldung: **24.11.1999**
(21) Anmeldenummer: 99108854.3
(22) Anmeldetag: 04.05.1999
(51) Int. Cl.: F16L 37/14

(54) **Rohrkupplung**

(30) Priorität: 20.05.1998 DE 19822753
(71) Anmelder: VERITAS GUMMIWERKE AG, 63571 Gelnhausen (DE)
(72) Erfinder: Geimer, Joachim, 63579 Freigericht (DE); Förthner, Reiner, 68519 Viernheim (DE); Zahn, Roland, 36396 Steinau a.d. Strasse (DE)
(74) Vertreter: Grünecker, Kinkeldey, Stockmair & Schwanhäusser Anwaltssozietät

(57) **Zusammenfassung**

Rohrleitung (1), vorzugsweise Hydraulikleitung, mit einem Stecker (3), der zum Anschließen der Rohrleitung (1) an einem Rohrleitungsanschluß (11), vorzugsweise Hydraulikanschluß, in einer Steckrichtung (E) im wesentlichen parallel zur Längserstreckung der Rohrleitung (1) in eine Aufnahme (13) des Rohrleitungsanschlusses (11) einsteckbar ist, mit einem Dichtelement (8) zum Abdichten der Aufnahme (13) gegenüber der Rohrleitung (1) bei eingestecktem Stecker (3), und mit einer Stützfläche (10) am Stecker (3) mit der der eingesteckte Stecker (3) entgegen der Steckrichtung (E) durch Abstützen an einem Sicherungselement (15) der Aufnahme (13) gegen Herausziehen sicherbar ist, wobei die Stützfläche (10) in Steckrichtung (E) hinter dem Dichtelement (8) angeordnet ist. Um die Herstellung derartiger Rohrleitungen (1) zu vereinfachen ist erfindungsgemäß vorgesehen, daß der Stecker (3) auf der Rohrleitung (1) verschieblich und das Dichtelement (8) unmittelbar an der Rohrleitung (1) angebracht ist und daß zwischen Dichtelement (8) und Stecker (3) eine fest mit der Rohrleitung (1) verbundene Stützeinrichtung (18) zum Abstützen des Steckers (3) in Steckrichtung (E) vorgesehen ist.

## Beschreibung

Die Erfindung bezieht sich auf eine Rohrleitung, vorzugsweise für Hydraulikleitungen, mit einem Stecker, der zum Anschließen der Rohrleitung an einen Rohrleitungsanschluß, vorzugsweise einen Hydraulikanschluß, in einer Steckrichtung im wesentlichen parallel zur Längserstreckung der Rohrleitung in eine Aufnahme des Rohrleitungsanschlusses einsteckbar ist, mit einem Dichtelement zum Abdichten der Aufnahme gegenüber der Rohrleitung bei eingestecktem Stecker, und mit einer Stützfläche am Stecker mit der der eingesteckte Stecker sich entgegen der Steckrichtung an einem Sicherungselement der Aufnahme abstützend gegen Herausziehen sicherbar ist, wobei die Stützfläche in Steckrichtung hinter dem Dichtelement angeordnet ist.

Eine derartige Rohrleitung ist aus dem Stand der Technik bekannt. Die Rohrleitung und der Stecker bestehen aus Stahl und sind an einer Übergangsstelle miteinander verlötet. Der Stecker ist im wesentlichen zylindrisch und weist eine Umfangsnut auf, in der das Dichtelement aufgenommen ist. Zum Verbinden der Rohrleitung mit einem Rohrleitungsanschluß wird die Rohrleitung mit dem Stecker in die Aufnahme des Rohrleitungsanschlusses in Steckrichtung eingesteckt. Nach dem Einstecken wird eine Sicherungsklammer angebracht, durch die ein Formschluß zwischen der Aufnahme und der Stützfläche des Steckers hergestellt wird. Auf diese Weise kann verhindert werden, daß der Stecker ungewollt herausgezogen wird. In Steckrichtung stützt sich der Stecker an der Aufnahme selbst ab. Dadurch ist der Stecker und die Rohrleistung in der Aufnahme axial festgelegt.

Als nachteilig bei derartigen Rohrleitungen erweist es sich, daß der Stecker mit der Rohrleitung verlötet ist. Dadurch muß die Rohrleitung und der Stecker aus demselben Material hergestellt sein. Aufgrund des Fertigungsablaufes muß die Rohrleitung nach dem Lötvorgang mit einer Oberflächenbeschichtung versehen werden, da eine bereits bestehende Beschichtung des Rohres aufgrund des Lötvorganges zerstört werden würde. Dadurch erhöht sich die Zahl der notwendigen Verfahrensschritte, um die Rohrleitung mit dem Stecker herzustellen, wodurch sich auch die Herstellungskosten erhöhen. Auch ist die Materialauswahl von Rohrleitung und Stecker aufgrund des Lötvorganges stark eingeschränkt.

Aufgabe der Erfindung ist es daher, eine Rohrleitung der eingangs genannten Art derart weiterzuentwickeln, daß der Lötvorgang eliminiert werden kann und auch Rohrleitungen mit Oberflächenbeschichtung eingesetzt werden können. Gleichzeitig soll die Herstellung der Rohrleitung mit Stecker stark vereinfacht werden.

Die Aufgabe wird bei einer Rohrleitung der eingangs genannten Art erfindungsgemäß dadurch gelöst, daß der Stecker auf der Rohrleitung verschieblich und das Dichtelement unmittelbar an der Rohrleitung angebracht ist, und daß zwischen Dichtelement und Stecker eine fest mit der Rohrleitung verbundene Stützeinrichtung zum Abstützen des Steckers an der Rohrleitung in Steckrichtung vorgesehen ist.

Diese Lösung ist einfach und hat den Vorteil, daß kein Lötvorgang mehr zwischen dem Stecker und der Rohrleitung erforderlich ist. Statt dessen ist der Stecker verschieblich auf der Rohrleitung angebracht. Dadurch können Stecker und Rohrleitung aus unterschiedlichen Materialien hergestellt werden. Auch können bereits beschichtete Rohre verwendet werden. Dadurch, daß die Dichtung unmittelbar auf der Rohrleitung angebracht ist, wird trotz des verschieblich auf der Rohrleitung gelagerten Steckers eine Abdichtung zwischen Rohrleitung und Aufnahme gewährleistet. Die erfindungsgemäße Rohrleitung läßt sich aufgrund der geringeren Anzahl von Arbeitsschritten kostengünstig herstellen. Zudem läßt sich der Stecker aus Material herstellen, das besonders leicht zu verarbeiten ist.

In einer vorteilhaften Weiterbildung der Erfindung kann die Rohrleitung als Stahlrohr ausgebildet sein. Dann läßt sich die Rohrleitung insbesondere als Hydraulikleitung verwenden.

Von Vorteil kann es zudem sein, wenn der Stecker aus einem von dem Material der Rohrleitung verschiedenem Material besteht. Dann lassen sich Stecker und Rohrleitung entsprechend der an sie gestellten Anforderungen im Hinblick auf die Materialauswahl optimieren.

Von Vorteil kann es dabei sein, wenn der Stecker aus Kunststoff besteht. Kunststoff läßt sich besonders leicht verarbeiten und ermöglicht eine besonders kostengünstige Herstellung der Stecker. Auch lassen sich dadurch auf einfache Weise komplizierte Formen des Steckers verwirklichen.

In einer vorteilhaften Weiterbildung kann die Stützeinrichtung durch einen ringförmig am Umfang der Rohrleitung umlaufenden Stützring gebildet werden. Dann läßt sich eine besonders gleichmäßige Anlage des Steckers an der Stützeinrichtung verwirklichen.

In einer vorteilhaften Weiterbildung kann der Stützring durch einen ringförmig umlaufenden Bördel des Stahlrohres gebildet werden. Dann läßt sich der Stützring integral mit dem Stahlrohr ausbilden und kann bereits bei der Herstellung des Stahlrohres erzeugt werden. Der Bördel wird dabei durch ein Stauchen des Endstückes des Stahlrohres erzeugt, so daß ein ringförmiger Bördel entsteht.

Zudem kann ein zweiter Bördel vorgesehen sein und kann das Dichtelement zwischen den beiden Bördeln angeordnet sein. Dadurch ist gleichzeitig eine Führung des Dichtelementes in axialer Richtung möglich.

Von Vorteil kann es dabei sein, wenn das Dichtelement ein O-Ring ist, wobei der Außendurchmessers des O-Ringes zumindest im nicht eingesteckten Zustand des Steckers größer als der Außendurchmesser der Bördel ist. Dadurch wird sichergestellt, daß der O-Ring bei eingestecktem Stecker seine Dichtwirkung entfaltet.

In einer vorteilhaften Weiterbildung der Erfindung kann die Stützfläche des Steckers durch eine vorzugsweise nutförmige Sicherungsaufnahme gebildet werden, in die das Sicherungselement vorzugsweise senkrecht zur Steckrichtung einsteckbar ist. Auf diese Weise läßt sich der Stecker formschlüssig in Axialrichtung sowohl in Steckrichtung, als auch entgegen der Steckrichtung in der Aufnahme festlegen.

Von Vorteil kann es dabei sein, wenn das Sicherungselement als Sicherungsklammer ausgebildet ist, die durch eine Öffnung in der Aufnahme hindurch in die Sicherungsaufnahme des Steckers einsteckbar ist, um einen Formschluß zwischen Aufnahme, Sicherungsklammer und Stecker zu erzielen. Auf diese Weise läßt sich eine einfach zu montierende Sicherung des Steckers in der Aufnahme realisieren.

In einer vorteilhaften Weiterbildung der Erfindung kann der Stecker im wesentlichen zylindrisch sein. Dann läßt sich der Stecker besonders einfach herstellen.

Zudem kann der Stecker einen Führungsabschnitt aufweisen, dessen Außendurchmesser zumindest abschnittsweise im wesentlichen dem Innendurchmesser der Aufnahme entspricht. Dadurch läßt sich eine radiale Führung des Steckers in der Aufnahme realisieren.

Von Vorteil kann es dabei sein, wenn der Führungsabschnitt nahe dem Stützring, zwischen Stützfläche und Stützring angeordnet ist. Dann läßt sich der Stecker leichter in die Aufnahme einstecken.

Darüber hinaus wird erfindungsgemäß eine Kupplung beansprucht, zum Verbinden einer Rohrleitung mit einem Rohrleitungsanschluß, mit einer im Rohrleitungsanschluß angeordneten Aufnahme zum Einstecken der einen Stecker aufweisenden Rohrleitung und mit einem Sicherungselement zum Sichern des Steckers mit der Rohrleitung gegen Herausziehen aus der Aufnahme, gekennzeichnet durch eine Rohrleitung nach einem der Ansprüche 1 bis 12.

Nachfolgend wird die Wirkung und Funktionsweise der Erfindung anhand eines Ausführungsbeispieles näher erläutert.

Es zeigen:
- Fig. 1: eine Rohrleitung aus dem Stand der Technik in einer Schnittansicht;
- Fig. 2: eine Schnittansicht der Rohrleitung aus dem Stand der Technik entlang der Linie II-II aus Fig. 1;
- Fig. 3: die erfindungsgemäße Rohrleitung in einer Schnittansicht.

Die Rohrleitung 1 aus dem Stand der Technik besteht aus einem Rohr 2 aus Stahl und einem ebenfalls durch spanabhebende Verfahren aus Stahl hergestellten Stecker 3. Das Rohr 2 und der Stecker 3 sind an der Lötstelle 4 miteinander verlötet.

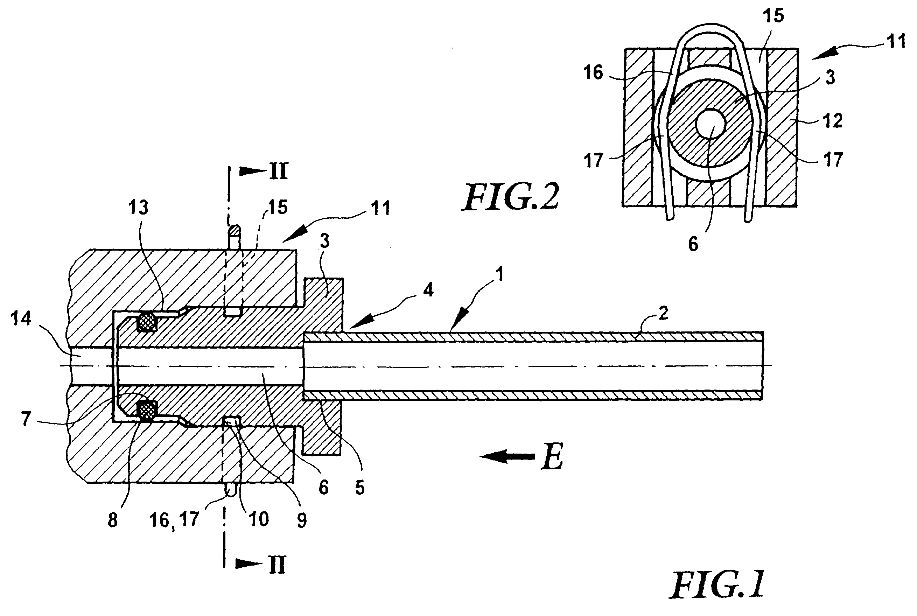

Der Stecker 3 weist dazu eine Vertiefung 5 auf, deren Innendurchmesser im wesentlichen dem Außendurchmesser des Rohres 2 entspricht und in die das Rohr 2 teilweise eingesteckt ist, wie dies aus Fig. 1 hervorgeht. Im Stecker 3 befindet sich eine Durchgangsbohrung 6, die in das Rohr 2 mündet.

Der Stecker 3 weist eine Dichtungsnut 7 auf, die am Umfang des Steckers 3 verläuft und einen O-Ring 8 aufnimmt. Darüber hinaus weist der Stecker 3 eine am Umfang verlaufende Sicherungsnut 9 auf, die eine Stützfläche 10 aufweist. Die Stützfläche 10 ist dabei die Wandung der Sicherungsnute 9.

In der Darstellung aus Fig. 1 ist die Rohrleitung mit einem teilweise schematisch dargestelltem Rohrleitungsanschluß 11 in einem in dieser Einsteckrichtung E eingesteckten Zustand dargestellt. Der Rohrleitungsanschluß 11 weist ein Gehäuse 12 mit einer Aufnahme 13 auf, in die der Stecker in Einsteckrichtung E einsteckbar ist. Das Gehäuse 12 weist eine Durchgangsbohrung 14 auf, die in die Durchgangsbohrung 6 mündet, bzw. mit dieser fluchtet.

Am Gehäuse 12 sind zwei als Einsteckschlitze ausgebildete Öffnungen 15 vorgesehen, in die ein Sicherungselement senkrecht zur Längserstreckung der Rohrleitung einsteckbar ist. Das Sicherungselement ist als Sicherungsklammer 16 ausgebildet, die federelastisch ist und zwei gebogene Arme 17 aufweist, die die Sicherungsnut 9 umschließen Die Sicherungsklammer 16 ist durch die Öffnungen 15 aus dem Gehäuse 12 herausnehmbar oder in dieses einsteckbar. Im eingesteckten Zustand der Sicherungsklammer ist der Stecker 3 in Axialrichtung der Rohrleitung im Gehäuse festgelegt.

Die erfindungsgemäße Rohrleitung wird nun im Unterschied zur Rohrleitung aus dem Stand der Technik näher erläutert. Gleiche Bauteile sind dabei mit gleichen Bezugszeichen bezeichnet.

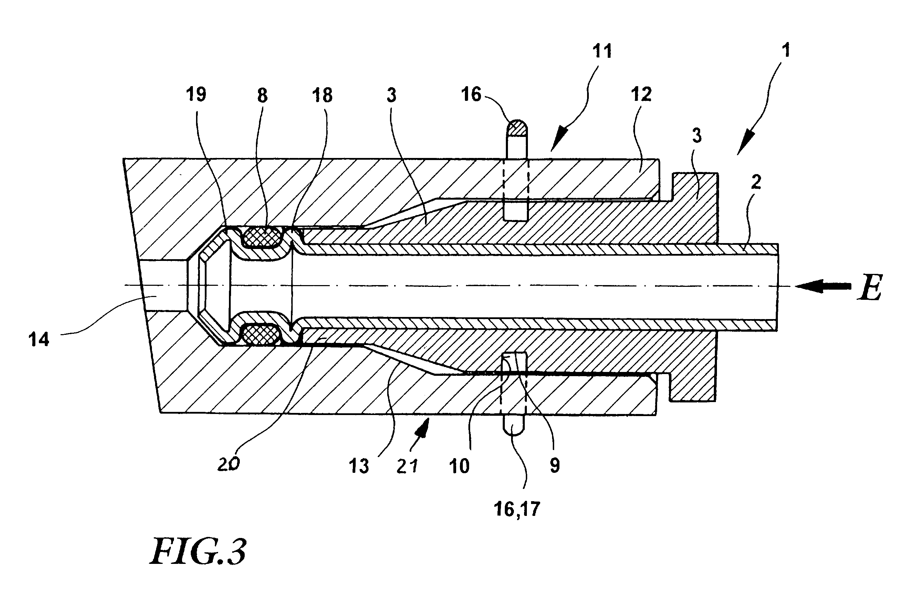

In Fig. 3 ist die Rohrleitung ebenfalls in einem im Rohrleitungsanschluß 11 eingesteckten Zustand abgebildet. Im Unterschied zur Rohrleitung aus dem Stand der Technik ist der Stecker 3 jedoch in axialer Richtung verschieblich auf dem Rohr 2 gelagert.

Das Rohr 2 besteht ebenfalls aus Stahl und ist mit zwei Bördeln 18 und 19 versehen. Zwischen den Bördeln ist der O-Ring 8 nicht mehr in einer Dichtungsnut 7 des Steckers 3 angeordnet, sondern unmittelbar auf dem Rohr 2 selbst und dichtet dadurch zwischen der Aufnahme 13 des Gehäuses 12 und dem Rohr 2 ab.

Die Aufnahme 13 ist so bemessen, daß die Rohrleitung einsteckbar ist und nach dem Einstecken nurmehr ein sehr geringes Spiel in Einsteckrichtung besteht.

Der Stecker 3 ist nicht mehr aus Stahl gefertigt, sondern aus Kunststoff und weist eine Sicherungsnut 9 mit Stützfläche 10 auf. Analog zur Rohrleitung aus dem Stand der Technik weist auch hier das Gehäuse 12 zwei Öffnungen 15 auf, in die eine Sicherungsklammer 16 eingesteckt ist, die in die Sicherungsnut 9 eingreift und dadurch den Stecker in axialer Richtung sichert. Die Sicherung erfolgt dabei formschlüssig zwischen Gehäuse 12 und Stecker 3. Durch die Stützfläche 10 ist die Rohrleitung mit Stecker 3 entgegen der Einsteckrichtung E festgelegt, da sich die Stützfläche 10 an der Sicherungsklammer 16 abstützt. Der Stecker 3 nimmt in seiner Durchgangsbohrung 6 das Rohr 2 auf. Der Bördel 18, der zwischen O-Ring und Stecker 3 angeordnet ist, bildet einen Stützring, an dem sich das Rohr 2 entgegen der Einsteckrichtung E am Stecker 3 abstützt.

Der Stecker 3 weist darüber hinaus noch einen Führungsabschnitt 20 auf, dessen Außendurchmesser im wesentlichen dem Innendurchmesser der Aufnahme 13 entspricht. Dadurch erfolgt eine radiale Führung der Rohrleitung.

Im nicht eingesteckten Zustand der Rohrleitung ist der Außendurchmesser des O-Ringes 8 größer als der Außendurchmesser der Bördel 18 und 19.

Die Rohrleitung 1 mit dem Stecker 3 bildet zusammen mit dem Rohrleitungsanschluß 11 eine Kupplung 21. Im vorliegenden Ausführungsbeispiel handelt es sich bei der Rohrleitung 1 um eine Hydraulikrohrleitung und bei dem Rohrleitungsanschluß 11 um einen Hydraulikanschluß von z.B. einem Hydraulikzylinder oder dergleichen. Bei dem Rohr 2 muß es sich nicht um ein völlig starres Rohr handeln, Es kann auch ein flexibles Rohr verwendet werden. Ebenso kann das Rohr im Bereich des Steckers fest sein und an einen Schlauch oder dergleichen angeschlossen sein. Auch läßt sich die erfindungsgemäße Kupplung nicht nur zum Verbinden einer Rohrleitung mit einem Rohrleitungsanschluß verwenden, sondern auch um z.B. zwei Rohrleitungen miteinander zu verbinden. Dann kann das Anschlußstück der einen Rohrleitung mit einer Aufnahme 13 versehen sein ähnlich dem Gehäuse 12 und die andere Rohrleitung wie die erfindungsgemäße Rohrleitung ausgebildet sein. Bei Anordnung zweier einander gegenüberliegender Aufnahmen 13 können auch zwei erfindungsgemäße Rohrleitungen miteinander verbunden werden.

Nachfolgend wird die Wirkung und Funktionsweise der Erfindung näher erläutert:

Zum Koppeln der Rohrleitung 1 mit einem Rohrleitungsanschluß 11 wird das Rohr 2 mit dem Stecker 3 und dem zuvor zwischen den beiden Bördeln 18 und 19 angeordneten O-Ring in die Aufnahme 13 des Gehäuses 12 des Rohrleitungsanschlusses 11 in Einsteckrichtung E eingesteckt. Anschließend wird die Sicherungsklammer 16 durch die Öffnung 15 im Gehäuse 12 senkrecht zur Längserstreckung des Rohres 2 eingesteckt, wobei die beiden Arme 17 durch den Grund der Sicherungsnut 9 elastisch auseinandergebogen werden, bis sie eine Stellung analog zu der in Fig. 2 dargestellten einnehmen. Alternativ kann die Klammer bereits in der Öffnung 15 im Gehäuse 12 eingesteckt sein, da die Schräge am Stecker in der Lage ist, beim Einschieben des Rohres mit Stecker die Klammer federelastisch aufzuweiten. Die Klammer rastet bei komplettem Fügen des Steckers in der Nut ein. Aufgrund der Sicherungsnut 9 ist der Stecker 3 in axialer Richtung sowohl in Steckrichtung, als auch entgegen der Steckrichtung E festgelegt. Aufgrund des Bördels 18 kann das Rohr 2 nicht aus dem Stecker 3 herausgezogen werden.

Durch die erfindungsgemäße Rohrleitung können bereits zuvor beschichtete Rohre verwendet werden, die bereits mit den Bördeln 18 und 19 versehen sind. Der Stecker 3, der aus Kunststoff gefertigt ist, kann getrennt davon hergestellt und auf das Rohr 2 aufgesteckt werden. Auf diese Weise werden Lötvorgänge oder dergleichen zum Verbinden von Rohr und Stecker vermieden.

## Patentansprüche

1. Rohrleitung, vorzugsweise Hydraulikleitung, mit einem Stecker (3), der zum Anschließen der Rohrleitung an einen Rohrleitungsanschluß, vorzugsweise Hydraulikanschluß, in einer Steckrichtung im wesentlichen parallel zur Längserstreckung der Rohrleitung (1) in eine Aufnahme (13) des Rohrleitungsanschlusses (11) einsteckbar ist, mit einem Dichtelement (8) zum Abdichten der Aufnahme (13) gegenüber der Rohrleitung (1) bei eingestecktem Stecker, und mit einer Stützfläche (10) am Stecker mit der der eingesteckte Stecker sich entgegen der Steckrichtung an einem Sicherungselement (15) der Aufnahme abstützend gegen Herausziehen sicherbar ist, wobei die Stützfläche in Steckrichtung hinter dem Dichtelement angeordnet ist, **dadurch gekennzeichnet,** daß der Stecker auf der Rohrleitung verschieblich und das Dichtelement unmittelbar an der Rohrleitung angebracht ist und daß zwischen Dichtelement und Stecker eine fest mit der Rohrleitung verbundene Stützeinrichtung (18) zum Abstützen des Steckers an der Rohrleitung in Steckrichtung vorgesehen ist.

2. Rohrleitung nach Anspruch 1, **dadurch gekennzeichnet,** daß der Stecker aus einem von dem Material der Rohrleitung verschiedenen Material besteht.

3. Rohrleitung nach Anspruch 1 oder 2, **dadurch gekennzeichnet**, daß der Stecker aus Kunststoff besteht.

4. Rohrleitung nach einem der vorangegangenen Ansprüche, **dadurch gekennzeichnet,** daß die Stützeinrichtung durch einen ringförmig am Umfang der Rohrleitung umlaufenden Stützring (18) gebildet wird.

5. Rohrleitung nach einem der vorangegangenen Ansprüche, **dadurch gekennzeichnet,** daß der Stützring durch einen ringförmig umlaufenden Bördel (18) des Stahlrohres gebildet wird.

6. Rohrleitung nach einem der vorangegangenen Ansprüche, **dadurch gekennzeichnet,** daß ein zweiter Bördel (19) vorgesehen ist, und daß das Dichtelement (8) zwischen den beiden Bördeln angeordnet ist.

7. Rohrleitung nach einem der vorangegangenen Ansprüche, **dadurch gekennzeichnet,** daß das Dichtelement ein O-Ring (8) ist, wobei der Außendurchmesser des O-Ringes zumindest im nicht eingesteckten Zustand des Steckers größer als der Außenumfangsdurchmesser der Bördel ist.

8. Rohrleitung nach einem der vorangegangenen Ansprüche, **dadurch gekennzeichnet,** daß die Stützfläche des Steckers durch vorzugsweise nutförmige Sicherungsaufnahmen (9) gebildet wird, in die das Sicherungselement vorzugsweise senkrecht zur Einsteckrichtung einsteckbar ist.

9. Rohrleitung nach einem der vorangegangenen Ansprüche, **dadurch gekennzeichnet,** daß das Sicherungselement als Sicherungsklammer (16) ausgebildet ist, die durch eine Öffnung (15) in der Aufnahme hindurch in die Sicherungsaufnahme des Steckers einsteckbar ist, um einen Formschluß zwischen Aufnahme, Sicherungselement und Stecker zu erzielen.

10. Rohrleitung nach einem der vorangegangenen Ansprüche, **dadurch gekennzeichnet,** daß der Stecker im wesentlichen zylindrisch ist.

11. Rohrleitung nach einem der vorangegangenen Ansprüche, **dadurch gekennzeichnet,** daß der Stecker einen Führungsabschnitt (20) aufweist, dessen Außendurchmesser zumindest abschnittsweise im wesentlichen dem Innendurchmesser der Aufnahme entspricht.

12. Rohrleitung nach einem der vorangegangenen Ansprüche, **dadurch gekennzeichnet,** daß der Führungsabschnitt nahe dem Stützring, zwischen Stützfläche und Stützring, angeordnet ist.

13. Kupplung zum Verbinden einer Rohrleitung mit einem Rohrleitungsanschluß, mit einer im Rohrleitungsanschluß angeordneten Aufnahme (13) zum Einstecken der einen Stecker aufweisenden Rohrleitung und mit einem Sicherungselement zum Sichern des Steckers mit der Rohrleitung gegen Herausziehen aus der Aufnahme, **gekennzeichnet durch** eine Rohrleitung nach einem der Ansprüche 1 bis 12.
